# EUROPEAN PATENT SPECIFICATION

(11) **EP 0 378 292 B1**
(45) Date of publication and mention of the grant of the patent: **27.10.1993**
(21) Application number: 90300031.3
(22) Date of filing: 03.01.1990
(51) Int. Cl.: C03B 11/08

(54) **Method of manufacturing glass optical element**
Verfahren zur Herstellung eines optischen Gegenstandes aus Glas
Procédé de fabrication d'un élément optique en verre

(30) Priority: 13.01.1989 JP 7249/89; 28.02.1989 JP 47629/89; 30.03.1989 JP 80371/89
(43) Date of publication of application: 18.07.1990
(73) Proprietor: MATSUSHITA ELECTRIC INDUSTRIAL CO., LTD., Kadoma-shi, Osaka-fu 571 (JP); SUMITA OPTICAL GLASS, INC., Chiyoda-ku Tokyo (JP)
(72) Inventor: Monji, Hideto, Katano-shi Osaka-fu 576 (JP); Kuribayashi, Kiyoshi, Neyagawa-shi Osaka-fu 572 (JP); Umetani, Makoto, Hirakata-shi Osaka-fu 573 (JP); Kawata, Noriyuki, Omiya-shi Saitama-ken 330 (JP)
(74) Representative: Crawford, Andrew Birkby

(56) References cited:
- DE-C- 855 763
- US-A- 4 685 948
- PATENT ABSTRACTS OF JAPAN, unexamined applications, C field, vol. 10, no. 139, May 22, 1986, The Patent Office Japanese Government, Kokai-no. 60-264333 (Matsushita Denki Sangyo K.K.)

## Description

The present invention relates to a method of manufacturing extremely precise glass optical elements such as lenses and prisms and to glass optical elements moulded from preforms by reheating processes.

Recently, there has been a significant tendency for glass optical elements to have aspherical surfaces as this allows manufacturers simultaneously to achieve simple lens construction and light-weight lenses for use with optical apparatuses. Since the conventional polishing methods for manufacturing optical lenses involve problems with respect to the processing and mass production of these aspherical lenses, moulding processes have been considered to be quite promising as disclosed in US-A-3,900,328, US-A-4,139,677, and US-A-4,168,961, for example. The proposed moulding process thermally moulds a roughly shaped optical-glass material by applying a non-spherical mould complete with the desired surface quality and surface accuracy or thermally moulds a gob of optical glass.

When manufacturing glass optical elements such as aspherical lenses and prisms by moulding using repeated thermal processes, it is essential for the manufacturers to use moulded glass optical preforms perfectly free from minimal concave and convex blemishes or scratches on the surface, i.e., the moulded glass optical preform must ideally have perfectly smooth surfaces for example having a maximum surface roughness of 0.005 microns (RMS). As described in US-A-4,139,677 and Japanese Laid-Open Patent Publication No. 59-116137 of 1984 for example, molten glass was up to then directly moulded by a mould or ground and polished before eventually yielding a conventional optical glass preform. As a result, a variety of complicated steps were needed for grinding and polishing glass and this resulted in high costs. On the other hand, there is conventional art which uses molten glass directly and in which the moulding plate or pressurised mould is initially coated with a carbon layer of parting agent by generating a vapour-phase reaction on the mould before finally processing glass heated to a high temperature. For example, this art is described in Japanese Laid-Open Patent Publication No. 54-60312 of 1979. However, since this prior art merely produces porous and uneven film of carbon layer of parting agent, a variety of problems occur. For example, residual parting agent easily adheres to the glass surface. As a result, a glass surface having a highly smooth surface with a maximum surface roughness of 0.005 microns (RMS) cannot be achieved. Furthermore, very fine concave and convex blemishes are also generated on the glass surface. In addition, as a result of oxidation and wear of the carbon layer, the life of the mould itself is shortened.

DE-C-855,763 discloses a method and apparatus for producing a glass article in which the supply of molten glass into a mould is controlled mechanically so as not to generate chill wrinkles on the upper surface of the glass supplies to the mould. US-A-4,685,948 dicloses a mould for press-moulding glass optical elements and a moulding method using the same. The mould comprises a base body which has heat resistance, good workability and adhesive property, and a press surface film formed on the base body and formed of a specific material. A mass of glass is placed between a pair of press-moulding moulds, and directly press-moulded with the application of heat and pressure.

An object of the invention is to provide a novel method of manufacturing extremely precise glass optical elements such as lenses and prisms and to provide a novel optical glass preform ideally suited for repeated heating processes.

To achieve the above object, the invention provides a novel method of manufacturing glass optical elements including a process for manufacturing an optical glass preform by thermally deforming optical glass on a very highly smooth surface (hereafter "optical surface") of a thermal processing former in a non-oxidizing atmosphere and another process for moulding the thermally deformed optical glass preform with a press mould under thermally pressurized condition.

The present invention provides a method of manufacturing a glass optical element comprising the steps of:
preparing an optical glass preform having a shape approximating to the required final shape of the glass optical element;
placing the optical glass preform between moulding surfaces of a pair of heated upper and lower moulds; and
press-moulding said optical glass preform with the pair of upper and lower moulds to obtain the final product of the glass optical element,
wherein the preparation of the glass optical preform comprises:
placing a gob of glass on a surface of a thermal processing former in a non-oxidising atmosphere, said surface of said thermal processing former being highly smooth and coated with a chemically stable thin film; and
heating the thermal processing former in the non-oxidising atmosphere whereby said glass gob is melted and thermally deformed to form said optical glass preform having a first surface, the shape of which is defined by said smooth surface contacting said first surface and a free second surface, formed by surface tension in the molten glass, not contacting said smooth surface.

When optical glass placed on an optical surface of a thermal processing former coated with a chemically stable thin film is heated, the surface of the optical glass in contact with the optical surface of the thermal processing former slowly deforms into a shape defined by the optical surface of the thermal processing former, whereas the other surface not in contact with the optical surface of the thermal processing former forms a free surface under the effect of the surface tension of the glass. As a result of the thermal deformation of optical glass, one surface is defined by the optical surface of the thermal processing former, whereas the other surface is a free surface. Glass optical elements having extremely high surface quality and surface accuracy can be manufactured by thermally moulding the optical glass preform formed as above with a press mould having a desired shape and optical surface.

According to the invention, the surface of the thermal processing former and preferably also the surface of the press mould is coated with a chemically stable thin film and provided with desired shape and optical surface. The chemically stable thin film may comprise a single element of noble metal or tungsten or tantalum or rhenium or hafnium or an alloy of at least two of these elements. None of these elements either reacts or adheres to the optical glass under a non-oxidizing atmosphere. A homogeneous and thick film can be soundly formed on the thermal processing former and the press mould by using either a sputtering process, an ion-plating process, or by plating. As a result, a highly smooth surface having a maximum surface roughness of 0.005 microns (RMS) can be formed without exfoliation of film and without generation of fine concave and convex blemishes over the glass surface. It is possible for the invention to form the above film not only on the optical surface, but also over the entire surface of the thermal processing former and the press mould.

By thermally deforming and moulding optical glass with a thermal processing former and press mould as mentioned above, the embodiments of the invention can very easily manufacture optical glass preforms and glass optical elements completely free from even minimal concave and convex blemishes or scratches on the entire surface having a perfect mirror surface with a maximum surface roughness of 0.005 microns (RMS).

The present invention also provides a method of manufacturing a glass optical element comprising the steps of:
preparing an optical glass preform having a shape approximating to the required final shape of the glass optical element;
placing the optical glass preform between moulding surfaces of a pair of heated upper and lower moulds; and
press-moulding said optical glass preform with the pair of upper and lower moulds to obtain the final product of the glass optical element,
wherein the preparation of the glass optical preform comprises:
receiving molten glass on a surface of a first thermal processing former to form the glass into a rough shape;
inverting and transferring the glass onto the surface of a second thermal processing former in a non-oxidising atmosphere, said surface of said second thermal processing former being highly smooth and coated with a chemically stable thin film; and
heating the second thermal processing former in the non-oxidising atmosphere whereby the glass is melted and thermally deformed to form said optical glass preform having a first surface, the shape of which is defined by said smooth surface, contacting said surface and a free second surface formed by surface tension in the molten glass not contacting said smooth surface.

The surface of the molten glass quickly cools and generates a thin skin. Since the inner part of the molten glass still has high temperature, the internal viscosity remains low, the interior being extremely fluid. If the molten glass were treated with a thermal processing former at a low temperature, in particular, if the first thermal processing former is at a low temperature when it receives the molten glass, chill wrinkles remain on the surface of the molten glass in contact with the first thermal processing former, whereas the surface not in contact with the first thermal processing former remains free of chill wrinkles because of the surface tension of the glass. When moving the melted glass onto the second thermal processing former by inverting the melted glass in the non-oxidizing condition, the free surface of the melted glass comes into contact with the second thermal processing former, whereas the surface of the melted glass in contact with the first thermal processing former does not contact the second thermal processing former, but it remains free. Compared to the moment immediately after being extruded from the nozzle, the temperature of the glass is now lower, and thus, no chill wrinkles are generated on the surface of the melted glass which is in contact with the second thermal processing former. When thermally deforming the glass on the optical surface of the second thermal processing former as above, the glass surface in contact with the optical surface of the second thermal processing former slowly deforms into a shape defined by the optical surface of the second thermal processing former, whereas the surface not in contact with the optical surface of the second thermal processing former forms free surface under the effect of surface tension of glass. In this way, an optical glass preform having one surface defined by the optical surface of the thermal processing former and the other surface being free can be manufactured. The prepared glass preform is then thermally moulded between a pair of press moulds each having desired shape and optical surface so that a glass optical element having extremely high surface quality and surface accuracy can eventually be manufactured.

To embody the invention, a first thermal processing former having a surface not readily covered (hereinafter "poor wettability") with melted glass may be used. Carbon, graphite, glassy carbon, boron nitride, stainless steel, nickel-radical alloy, etc. exhibit poor wettability with molten glass. Each of the second thermal processing former and the press mould may be coated with a chemically stable thin film and provided with desired shape and optical surface. Such a chemically stable thin film may comprise a noble metal or tungsten or rhenium or hafnium or an alloy of at least two of these elements. A homogeneous and thick film can be soundly formed by using either a sputtering process, or an ion-plating, or plating process using the second thermal processing former and the press mould. As a result, a highly smooth surface having a maximum surface roughness of 0.005 micron (RMS) can be achieved without exfoliation of film and without fine concave and convex blemishes on the glass surface.

A non-oxidizing atmosphere is generated by using an inert gas such as nitrogen gas, argon, or helium, or by properly blending an inert gas with an appropriate volume of hydrogen, or carbon oxide (such as carbon monoxide or carbon dioxide), a hydrocarbon (such as methane, ethane, ethylene, or toluene), a halogenated hydrocarbon (such as trichloroethylene, or trichlorotrifluoethylene), an alcohol (such as ethylene glycol or glycerin), and a fluorocarbon (such as F-113 or F-11). The composition of the non-oxidizing atmosphere can optionally be selected in accordance with the composition of the optical glass, the composition of thin film to be coated on the thermal processing former and the press mould, the temperature and the time needed for thermally deforming the optical glass, and the required shape of optical glass preform.

Another aspect of the invention is to provide a novel optical glass preform having one surface substantially defined by the optical surface of the second thermal processing former coated with a chemically stable film and the other surface being a free surface. The optical glass preform produced according to this invention has extremely high surface quality and surface accuracy, where the preform is not only usable as the preform of glass optical element produced by recurrent heating processes, but it can also effectively be used for composing high-precision glass optical elements.
Fig. 1 illustrates a sectional view of a thermal processing former and a press mould used for embodying the invention;
Fig. 2 illustrates a sectional view of an embodiment of the invention showing the optical glass placed on the thermal processing former;
Fig. 3 illustrates a sectional view of an embodiment showing the thermally deformed optical glass;
Fig. 4 illustrates a sectional view of the optical glass preform embodied by the invention;
Fig. 5 illustrates a sectional view of an embodiment of the press moulding process executed for producing the optical glass preform using the press mould of the invention;
Fig. 6 illustrates a sectional view of an embodiment of the apparatus for manufacturing the glass optical elements related to the invention; and
Fig. 7 illustrates another embodiment of the apparatus for manufacturing the glass optical element related to the invention.

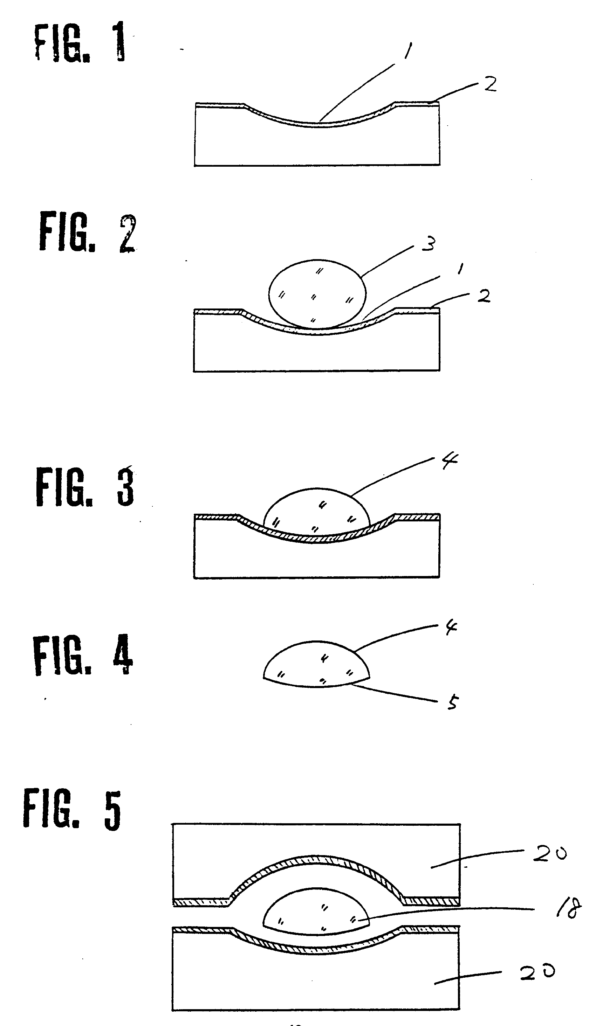

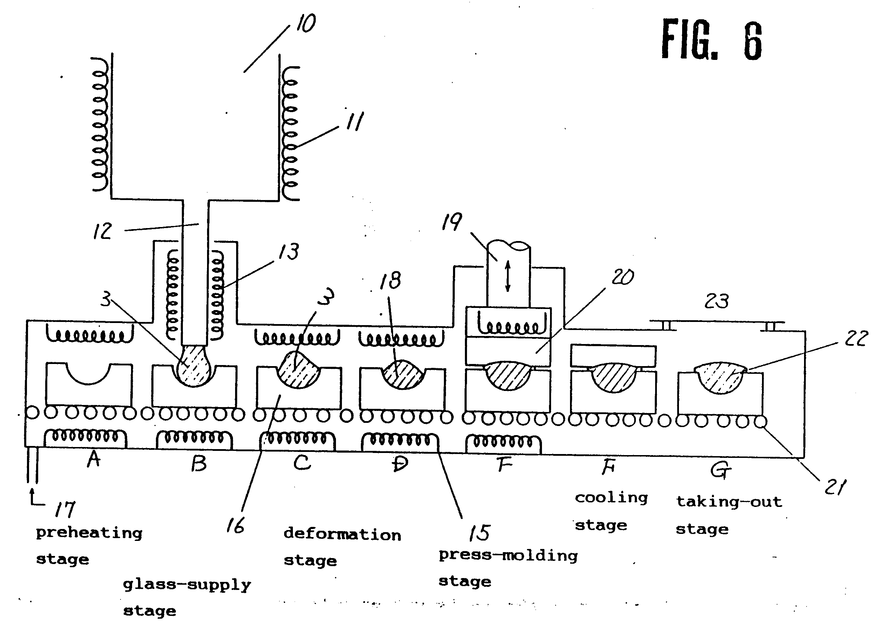

Fig. 1 illustrates a sectional view of a thermal processing former and a press mould used for embodying the invention. The thermal processing former 16 and the press mould 20 (in Fig. 6) are respectively completed by coating chemically stable film 2 over the optical surface 1 of the substrate prepared in the desired shape and surface roughness. The thin film 2 may comprise either a noble metal or tungsten or tantalum or rhenium or hafnium or an alloy of at least two of these elements. Fig. 2 illustrates the optical glass 3 placed on and heated by the thermal processing former 16. Fig. 3 illustrates that the optical glass 3 is thermally deformed on the thermal processing former 16. Fig. 4 illustrates the sectional view of the optical glass preform, in which the portion of the optical glass in contact with the optical surface 1 of the thermal processing former 2 takes up a defined shape as a result of the thermal deformation of the optical glass 3 itself, whereas the portion not in contact with the optical surface 1 of the thermal processing former 16 forms free surface 4. Fig. 5 illustrates that the optical glass preform 18 is thermally moulded by the press mould 20.

Referring now to Fig. 6, an embodiment of the invention is described below.

The optical glass 3 is thermally deformed and press-moulded by the production apparatus after the adjustment of the gas atmosphere to the desired level by feeding gas through the gas inlet 17 and the internal temperature using the heater 15 is completed. The production apparatus comprises pre-heating stage A, glass supply stage B, thermal deformation stages C and D, press-moulding stage E, cooling stage F, and exit stage G, respectively. The thermal processing former 16 may be moved by the rollers 21 inside the production apparatus. The heater 11 heats and melts the optical glass in the tank 10. The heater 13 controls the temperature of the nozzle 12 which drips a predetermined weight of optical glass 3 onto the thermal processing former 16 which has been pre-heated in the pre-heating stage A, at the position shown as glass supply stage B. When the thermal deformation stage C is entered, the optical glass 3 is heated and roughly shaped on the thermal processing former 16, which is further heated in the thermal deformation stage D before completing the production of the optical glass preform 18 having the required shape as shown in Fig. 4. When the press moulding stage E is entered, the optical glass preform 18 is continuously heated and pressed by the cylinder 19 of the press mould 20 having a predetermined shape and surface roughness. After being thermally pressed and moulded, the glass optical element 22, having been heated by the press mould 20 and the thermal processing former 16 is cooled in the cooling stage F. The cooled glass optical element 22 is eventually taken out from the outlet 23 in the taking out stage G.

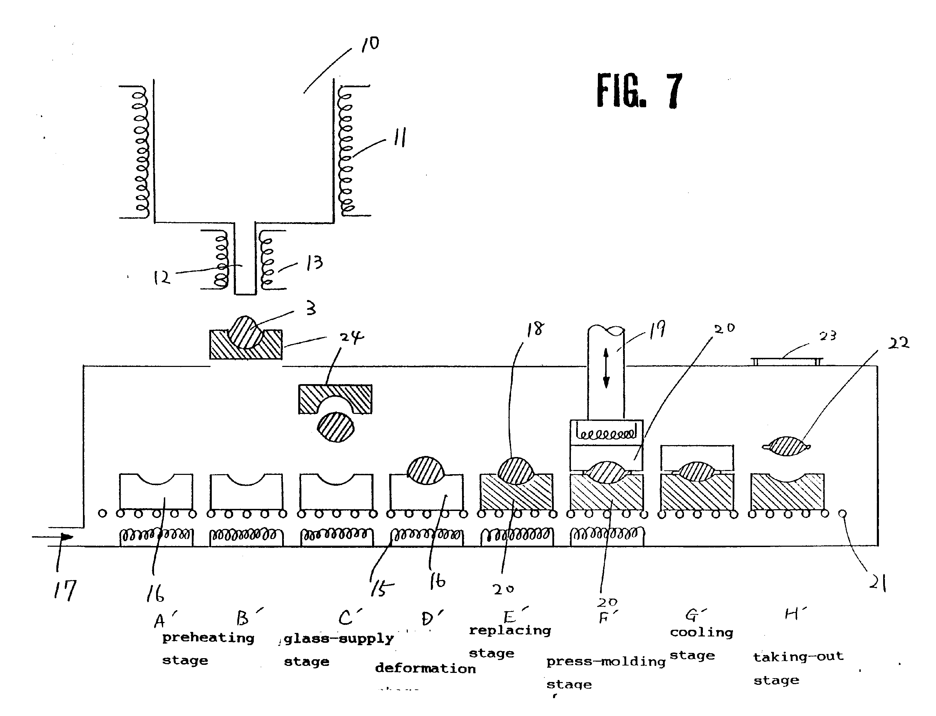

Referring now to Fig. 7, another embodiment of the invention is described below.

After the adjustment of the gas atmosphere to the predetermined level by feeding gas through the gas inlet 17 and the internal temperature using the heater 15 is completed, the optical glass 3 is thermally deformed and press-moulded by the production apparatus. The production apparatus comprises the pre-heating stages A' and B', glass supply stage C', thermal deformation stage D', replacing stage E' in which optical glass preform 18 is moved onto the press mould 20, press-moulding stage F', cooling stage G', and exit stage H', respectively. The thermal processing former 16 and the press mould 20 may be moved in the production apparatus by means of the internal rollers 21. The heater 11 heats and melts the optical glass 3 inside the tank 10. Another heater 13 controls the temperature of the nozzle 12 which drips a predetermined weight of optical glass 3 onto the first former 24 positioned outside the production apparatus. Immediately after this, the first thermal processing former 24 is introduced into the production apparatus. Next, the optical glass 3 is inverted together with the first thermal processing former 24. The first thermal processing former 24 drips the molten optical glass 3 onto the second thermal processing former (pre-heated in the pre-heating stages A' and B') in the subsequent glass supply stage C'. When the thermal deformation stage D' is entered the optical glass 3 is heated to complete the production of the optical glass preform 18 having the required shape as shown in Fig. 4.

When the replacing stage E' is entered, the optical glass preform 18 is moved onto the pre-heated press mould 20. Using the pre-heated press mould 20 (not shown), the optical glass preform 18 is thermally pressed and moulded by the cylinder 19 of the press mould 20 having the predetermined shape and surface roughness in the press moulding stage E'. After completing the press-moulding process, the cooling stage G' is entered, in which the glass optical element 22 held by the press mould 20 and the thermal processing former 16 is cooled. Finally, the cooled glassy optical element 22 is taken out from the outlet 23 in the taking out stage H'.

### Example 1

First, a concave optical surface 1 having a radius of curvature of 20 mm was formed in a super hard alloy (WC-5TiC-8Co) body as a substrate for the thermal processing former 16. The concave surface 1 was then abraded for about an hour with extremely fine diamond powder in order to finish the optical surface having a surface roughness of about 2.5 nm (25 A) (RMS). The thermal processing former 16 was completed by coating the optical surface with thin film 2 composed of an alloy of platinum, iridium, and osmium (Pt-Ir-Os) by a sputtering process.

The optical glass 3 was then thermally deformed by means of the production apparatus shown in Fig. 6. Optical glass 3 was melted in the tank 10 heated by heater 11 at 1,100°C. Under the control of heater 13 the temperature of nozzle 12 was maintained at 800°C and about 2 grams of melted optical glass 3 was dripped from the nozzle 12 onto the thermal processing former 16 (pre-heated to 600°C in pre-heating stage A) at the position of glass supply stage B, as shown in Fig. 2. The optical glass 3 was glass comprising barium boric silicide, and was formulated with 30% by weight of silica (SiO₂), 50% by weight of barium oxide (BaO), 15% by weight of boric acid (B₂O₃), and minimum amounts of impurities for the rest. In order to maintain a nitrogenous atmosphere, a flow of 20 litres per minute of nitrogen gas was continuously fed to the production apparatus. The optical glass 3 was then thermally processed on the thermal processing former at 640°C heated by heater 15 during the thermal deformation stages C and D for 10 minutes. Immediately after completion of these thermal processes, the optical glass 3 was cooled in the cooling stage F, omitting the press moulding stage E. When the temperature of optical glass 3 had fallen to 300°C, the cooled optical glass preform 18 shown in Fig. 4 was removed.

The optical glass preform 18 produced by performing the above process had a free surface 4 on one side and a surface 5 on the other side which was defined by the optical surface 1 of the thermal processing former 16. The free surface 4 and the surface 5 respectively had optical surfaces which were found to have surface roughnesses of about 3nm (30A) and about 2nm (20A) (RMS) without even minimal concave or convex blemishes or scratches. The above optical glass preform 18 had a maximum of two Newton's rings and surface 5 had a maximum aspherical index of one-fifth. This showed that extremely high surface quality and surface accuracy were achieved at the end of the process.

### Example 2.

First, a concave optical surface 1 having a radius of curvature of 20mm was formed in a super hard alloy (WC-STiC-8Co) body as a substrate for the thermal processing former 16. The concave surface 1 was then abraded for about an hour with extremely fine diamond powder in order to finish the optical surface having a surface roughness of about 2.5nm (25A) (RMS). The thermal processing former 16 was completed by coating the optical surface with thin film 2 composed of platinum, iridium, and osmium .(Pt-Ir-Os) by a sputtering process. Using the same process as above for manufacturing the thermal processing former 16, a pair of press moulds 20 each having concave optical surface with a radius of curvature of 200mm were produced coated with thin film 2 composed of an alloy of platinum, iridium, and osmium.

Optical glass 3 was thermally deformed and press-moulded by means of the production apparatus shown in Fig. 6. Optical glass 3 was melted in the tank 10 heated to 1,200°C by heater 11, and then, with heater 13 controlling the temperature of the nozzle 12 to be 900°C, about 1 gram of the optical glass 3 was dripped from the nozzle 12 onto the thermal processing former 16 (pre-heated to 740°C in pre-heating stage A) at the position of glass supply stage B. As shown in Fig. 2, optical glass 3 was thereby positioned on thermal processing former 16. The optical glass 3 was composed of 30% by weight of silica (SiO₂), 50% by weight of barium oxide, 15% by weight of boric acid, and minimal amounts of impurities for the rest. A gaseous flow made up of 20 litres per minute of nitrogen gas and 2 litres per minute of hydrogen gas was continuously fed to the production apparatus through the gas inlet 17. During the thermal deformation stages C and D, the optical glass 3 was processed on the thermal processing former 16 heated by heater 15 at 740oC for 10 minutes in order to complete the optical glass preform 18. The optical glass preform 18 held by the thermal processing former 16 was transferred to the moulding stage E by means of the rollers 21, and then moulded with the press cylinder 19 of the press mould 20 at 620°C for 2 minutes by applying a pressure of 30 kg/cm². Immediately after completion of the press moulding process, the glass optical element 22 held by the press mould 20 and the thermal processing former 16 was transferred to the cooling stage F by means of the rollers 21, and then gradually cooled. Once the temperature of the glass optical element 22 had fallen to 300°C the element entered the exit stage G and the glass optical element 22 was taken out from the outlet 23 to complete the production of the glass optical element 22 shown in Fig. 6.

The glass optical element 22 so produced had a highly smooth surface having a surface roughness of about 2.5nm (25A) (RMS) on the press-moulded surface without having even minimal concave or convex blemishes or scratch. The completed glass optical element 22 had a maximum of two Newton's rings and a maximum aspherical index of one-fifth. This showed that extremely high optical performance characteristic was achieved at the end of the process.

### Example 3.

First, a concave optical surface having a radius of curvature of 15mm was formed in a carbon body as the first thermal processing former 24. Another concave optical surface 1 having a radius of curvature of 45mm was formed on a austenite steel (SUS 316) body as the substrate for the second thermal processing former 16. The optical surface 1 was then abraded for about an hour with extremely fine diamond powder in order to finish the optical surface having a surface roughness of about 3nm (30A). The second thermal processing former 16 was completed by coating the optical surface with thin film 2 comprising an alloy of rhodium, gold, and tungsten (Rh-Au-W) by an ion-plating process. Using the same process as above for the second thermal processing former 16, a pair of press moulds 2Q were also completed being coated with thin film 2 comprising the alloy of rhodium, gold, and tungsten (Rh-Au-W) over the surface of a hard metal having a concave optical surface with a of radius of curvature of 150mm. The optical glass 3 was formulated with 8% by weight of zirconia (ZrO2), 30% by weight of lanthanum oxide (La2O3), 42% by weight of boric acid (B2o3), 10% by weight of calcium oxide (CaO), and minimal amounts of impurities for the rest.

As shown in Fig. 7, the interior of the production apparatus was filled with a halogenated atmosphere composed of vaporized trichlorotrifluoroethylene (C₂Cl₃F₃) fed to the production apparatus through gas inlet 17 together with nitrogen gas as a carrier. Optical glass was melted in the tank 10 heated to 1,350°C by heater 11. With heater 13 controlling the temperature of the nozzle 12 to be 950°C, about 4 grams of the molten optical glass 3 was dripped from nozzle 12 onto first thermal processing former 24 positioned outside the production apparatus. Immediately following the dripping, first thermal processing former 24 was introduced in the production apparatus, and then inverted together with optical glass 3. When glass supply stage C' was entered, optical glass 3 was delivered to second thermal processing former 16 which was pre-heated to 830°C with the heater 15 during pre-heating stages A' and B'. During thermal deformation stage D', optical glass 3 was heated to 830°C for 10 minutes until optical glass preform 18 had the required shape shown in Fig. 4. Next, in replacing stage E', optical glass preform 18 was moved from second thermal processing former 16 onto press mould 20 which was pre-heated to 680°C (not shown). In the subsequent press moulding stage F', optical glass preform 18 was moulded by being thermally pressed with the cylinder 19 (part of press mould 20) at 680°C for 2 minutes under 30kg/cm² pressure. Then, in cooling stage G', optical glass preform 18 held by press mould 20 was gradually cooled at a rate of 20oC per minute until the temperature reduced to 400°C. Cooled glass optical element 22 was finally removed from outlet 23 in the exit stage H'.

The glass optical element 22 completed as described by the above sequential processes had a highly smooth surface having a surface roughness of about 2.5nm (25A) (RMS) on the press-moulded surface without forming even minimal concave or convex blemishes or scratches. The completed glass optical element 22 had a maximum of two Newton's rings and a maximum aspherical index of one-fifth. This showed that extremely high optical performance characteristic was securely achieved.

### Example 4

First, a concave optical surface having a radius of curvature of 15mm was formed on a carbon body as first thermal processing former 24. Another concave optical surface having a radius of curvature of 145mm was formed on a cermet alloy body composed of TiC-10Mo-9Ni as the substrate of second thermal processing former 16. Optical surface 1 was then abraded for about an hour with extremely fine diamond powder in order to finish the optical surface having a surface roughness of about 2.5nm (25A) (RMS). Second thermal processing former 16 was completed by coating the optical surface with thin film 2 composed of an alloy of platinum, tantalum, and rhenium (Pt-Ta-Re) by a sputtering process. Using the same process as for manufacturing second thermal processing former 16, a pair of press moulds 20 were completed by coating thin film 2 composed of an alloy of rhodium, gold, and tungsten (Rh-Au-W) over the surface of hard metal which was processed into a concave optical surface having a radius of curvature of 250mm by applying an ion-plating process. The optical glass 3 was formulated with 65% by weight of silica (Si02), 9% by weight of potassium oxide (K20), 10% by weight of boric acid (B203), 10% by weight of sodium oxide (Na20), and minimal amounts of impurities for the rest.

As shown in Fig. 7, the interior of the production apparatus was filled with a hydrocarbon atmosphere by a gas flow comprising 20 litres per minute of argon and 1 litre per minute of ethylene (C₂H₄) fed into the production apparatus through inlet 17. Optical glass 3 was melted in the tank 10 heated to 1,350°C by heater 11. With heater 13 controlling the temperature of nozzle 12 to be 920°C, about 3 grams of optical glass 3 was dripped from nozzle 12 onto first thermal processing former 24 positioned outside the production apparatus. Immediately following the dripping, first thermal processing former 24 was introduced into the production apparatus, and then inverted together with optical glass 3. When glass supply stage C' was entered, the inverted optical glass 3 was delivered to second thermal processing former 16 which was pre-heated to 780°C during pre-heating stages A' and B'. During thermal deformation stage D', optical glass 3 was heated to 780°C for 10 minutes until the optical glass preform 18 had the required shape shown in Fig. 4. In replacing stage E', the optical glass preform 18 was moved from the second thermal processing former 16 onto the press mould 20 which was pre-heated to 680°C (not shown). In the subsequent press-moulding stage F', optical glass preform 18 was moulded by being thermally pressed with cylinder 19 (part of press mould 20) at 680°C for 2 minutes under 30 kg/cm² pressure. Next, in cooling stage G', optical glass preform 18 held by press mould 20 was cooled at a rate of 30°C per minute until the temperature reduced to 450°C. Finally, in exit stage H', cooled glass optical element 22 was removed from outlet 23 of the production apparatus.

The glass optical element 22 completed by the processes described above had a highly smooth surface having a surface roughness of about 2.5nm (25A) (RMS) on the press-moulded surface without forming even minimal concave or convex blemishes or scratches. The completed glass optical element 22 had a maximum of two Newton's rings and a maximum aspherical index of one fifth. This showed that extremely high optical performance characteristic was securely achieved.

### Example 5

First, a concave surface having a radius of curvature of 25mm was formed on a boron nitride (BN) body as the substrate of first thermal processing former 24. Another concave optical surface 1 having a radius of curvature of 45mm was formed on a silicon body as the substrate of the second thermal processing former 16. Optical surface 1 was then abraded for about an hour with extremely fine diamond powder in order to finish the optical surface having a surface roughness of about 2.5nm (25A) (RMS). Second thermal processing former 16 was completed by coating the optical surface with thin film 2 composed of rhodium, gold, and tungsten (Rh-Au-W) by a sputtering process. Using the same process as for manufacturing second thermal processing former 16, press mould 20 was completed by coating with thin film 2 composed of the alloy of platinum, iridium, and osmium (Pt-Ir-Os) over the concave optical surface composed of cermet (TiC-l0Mo-9Ni) having a radius of curvature of 100mm. The optical glass 3 was formulated with 52% by weight of silica (Si02), 6% by weight of potassium oxide (K20), 35% by weight of lead oxide (PbO), 5% by weight of sodium oxide (Na20), and minimal amounts of impurities for the rest.

As shown in Fig. 7, the interior of the production apparatus was filled with a required atmosphere by way of a combined flow of 20 litres per minute of helium gas and 2 litres per minute of carbon dioxide being fed to the production apparatus through gas inlet 17. Optical glass 3 was melted in the tank 10 heated to 1,250°C by heater 11. With heater 13 controlling the temperature of the nozzle 12 to be 780°C, about 5 grams of optical glass 3 was dripped from nozzle 12 onto first thermal processing former 24 positioned outside the production apparatus. Immediately after the dripping, first thermal processing former 24 was introduced into the production apparatus, and then inverted, together with optical glass 3. In glass supply stage C', the inverted optical glass 3 was delivered to second thermal processing former 16 which was pre-heated to 610°C by heater 15 during the pre-heating stages A' and B'. Next, in thermal deformation stage D' optical glass 3 was heated at 610oC for 5 minutes until the optical glass preform 18 had the required shape shown in Fig. 4. In replacing stage E' optical glass preform 18 was moved from the second thermal processing former 16 onto the press mould 20 which was pre-heated to 550°C (not shown). In the subsequent press-moulding stage F' optical glass preform 18 was moulded being thermally pressed using cylinder 19 (part of press mould 20) at 550°C for a minute under 80kg/cm² of pressure. In cooling stage G' glass optical element 22 held by the press mould 20 was cooled at a rate of 15°C per minute until the temperature of the glassy optical element 22 reduced to 330°C. Finally, the cooled glass optical element 22 was removed from outlet 23 in the exit stage H'.

The glass optical element 22 completed by the sequential processes described above had a highly smooth surface having a surface roughness of about 2.5nm (25A) (RMS) on the press-moulded surface without incurring even the minimal concave or convex blemishes or scratches. The completed glass optical element 22 had a maximum of two Newton's rings and a maximum aspherical index of one fifth. This showed that extremely high optical performance characteristic was securely achieved.

It should expressly be understood that the composition of the optical glass, composite materials of the first and second thermal processing formers, press mould, and thin film coated over these thermal processing formers and the press mould, the conditions of thermal deformation including temperature, time, and atmosphere, shapes of the optical glass preform, or the conditions including the method of replacing the optical glass from the first thermal processing former onto the second thermal processing former by inverting the optical glass on the first thermal processing former, shall by no means be confined to those embodiments described above.

## Claims

1. A method of manufacturing a glass optical element comprising the steps of:
preparing an optical glass preform (18) having a shape approximating to the required final shape of the glass optical element (22);
placing the optical glass preform between moulding surfaces of a pair of heated upper and lower moulds (20); and
press-moulding said optical glass preform with the pair of upper and lower moulds to obtain the final product of the glass optical element,
wherein the preparation of the glass optical preform comprises:
placing a gob of glass (3) on a surface of a thermal processing former (16) in a non-oxidising atmosphere, said surface of said thermal processing former being highly smooth and coated with a chemically stable thin film (2); and
heating the thermal processing former in the non-oxidising atmosphere whereby said glass gob is melted and thermally deformed to form said optical glass preform having a first surface (5), the shape of which is defined by said smooth surface/ contacting said first surface and a free second surface (4), formed by surface tension in the molten glass, not contacting said smooth surface.

2. A method according to claim 1, wherein said lower mould (20) is used as said thermal processing former (16).

3. A method of manufacturing a glass optical element comprising the steps of:
preparing an optical glass preform (18) having A shape approximating to the required final shape of the glass optical element (22);
placing the optical glass preform between moulding surfaces of a pair of heated upper and lower moulds (20); and
press-moulding said optical glass preform with the pair of upper and lower moulds to obtain the final product of the glass optical element,
wherein the preparation of the glass optical preform comprises:
receiving molten glass (3) on a surface of a first thermal processing former (24) to form the glass into a rough shape;
inverting and transferring the glass onto the surface of a second thermal processing former (16) in a non-oxidising atmosphere, said surface of said second thermal processing former being highly smooth and coated with a chemically stable thin film (2); and
heating the second thermal processing former in the non-oxidising atmosphere whereby the glass is melted and thermally deformed to form said optical glass preform having a first surface (5), the shape of which is defined by said smooth surface, contacting said surface and a free second surface (4) formed by surface tension in the molten glass not contacting said smooth surface.

4. A method according to claim 3, wherein the surface of said first thermal processing former (24) in contact with the molten glass comprises a material not readily covered by molten glass.

5. A method according to claim 4, wherein said material comprises carbon, graphite, glassy carbon, boron nitride, stainless steel or a nickel-base alloy.

6. A method according to any one of claims 1 to 5, wherein the moulding surfaces of said pair of upper and lower moulds (20) are each coated with a chemically stable thin film (2).

7. A method according to any one of claims 1 to 6, wherein said chemically stable thin film comprises at least one element selected from the group consisting of noble metal, tungsten, tantalum and rhenium.

8. An optical glass preform having a shape approximating to the shape of a glass optical lens, having at one side thereof a first surface (4) and at the other side thereof a second surface (5), the second surface being defined by a highly smooth surface (1) of a thermal processing former (16) which is coated with a chemically stable thin film (2), said preform being obtainable by placing a gob of molten glass on said highly smooth surface of said thermal processing former in a non-oxidising atmosphere, and heating said thermal processing former in the non-oxidising atmosphere whereby said glass is melted and thermally deformed to produce said second surface defined by said highly smooth surface at a portion contacting said smooth surface and said first surface formed by surface tension in the molten glass at a portion not contacting said smooth surface.

## Patentansprüche

1. Verfahren zur Herstellung eines optischen Bauteils aus Glas, das die folgenden Schritte umfaßt:
Herstellung eines Vorformlings aus optischem Glas mit einer Form, die annähernd der erforderlichen Endform des optischen Bauteiles aus Glas entspricht;
Auflegen des Vorformlings aus optischem Glas zwischen Formflächen eines Paares erwärmter oberer und unterer Formen; und
Preßformen des Vorformlings aus optischem Glas mit dem Paar oberer und unterer Formen, um das Enderzeugnis des optischen Bauteils aus Glas zu erzeugen, wobei die Herstellung des optischen Vorformlings aus Glas umfaßt:
Auflegen eines Rohlings aus Glas auf eine Oberfläche einer Wärmebearbeitungsform in einer nichtoxidierenden Atmosphäre, wobei die Oberfläche der Wärmeverarbeitungsform hochglatt ist und mit einer chemisch stabilen, dünnen Schicht überzogen ist; und
Erwärmen der Wärmebearbeitungsform in der nichtoxidierenden Atmosphäre, wobei der Glasrohling geschmolzen und wärmeverformt wird und den Vorformling aus optischem Glas mit einer ersten Oberfläche bildet, deren Form durch die glatte Oberfläche bestimmt wird, die mit der ersten Oberfläche in Kontakt ist, sowie mit einer freien zweiten Oberfläche, die durch Oberflächenspannung im geschmolzenen Glas gebildet wird, und die mit der glatten Oberfläche nicht in Kontakt ist.

2. Verfahren nach Anspruch 1, wobei die untere Form (20) als die Wärmebearbeitungsform (16) verwendet wird.

3. Verfahren zur Herstellung eines optischen Bauteils aus Glas, das die folgenden Schritte umfaßt:
Herstellen eines Vorformlings aus optischem Glas mit einer Form, die annähernd der erforderlichen Endform des optischen Bauteils aus Glas entspricht;
Auflegen des Vorformlings aus optischem Glas zwischen Formflächen eines Paares erwärmter oberer und unterer Formen; und
Preßformen des Vorformlings aus optischem Glas mit dem Paar oberer und unterer Formen, um das Enderzeugnis des optischen Bauteils aus Glas zu erzeugen,
wobei die Herstellung des Vorformlings aus optischem Glas umfaßt:
Auffangen geschmolzenen Glases auf einer Oberfläche einer ersten Wärmebearbeitungsform zum Formen des Glases in eine grobe Form;
Wenden und Überführung des Glases auf die Oberfläche einer zweiten Wärmebearbeitungsform in einer nichtoxidierenden Atmosphäre, wobei die Oberfläche der zweiten Wärmebearbeitungsform hochglatt und mit einer chemisch stabilen, dünnen Schicht überzogen ist; und
Erwärmen der zweiten Wärmebearbeitungsform in der nichtoxidierenden Atmosphäre, wodurch das Glas geschmolzen und wärmeverformt wird und den Vorformling aus optischem Glas mit einer ersten Oberfläche bildet, deren Form durch die glatte Oberfläche bestimmt wird, die mit der Oberfläche in Kontakt ist, sowie mit einer freien zweiten Oberfläche, die durch Oberflächenspannung im geschmolzenen Glas gebildet wird und die nicht mit der glatten Oberfläche in Kontakt ist.

4. Verfahren nach Anspruch 3, wobei die Oberfläche der ersten Wärmebearbeitungsform (24), die mit dem geschmolzenen Glas in Kontakt ist, ein Material umfaßt, das nicht leicht von geschmolzenem Glas bedeckt wird.

5. Verfahren nach Anspruch 4, wobei das Material Kohlenstoff, Graphit, Glaskohlenstoff, Bornitrid, rostfreien Stahl oder eine Legierung auf Nickelbasis umfaßt.

6. Verfahren nach einem der Ansprüche 1 bis 5, wobei die Formoberflächen des Paars der oberen und der unteren Form (20) jeweils mit einer chemisch stabilen dünnen Schicht (2) beschichtet sind.

7. Verfahren nach einem der Ansprüche 1 bis 6, wobei die chemisch stabile dünne Schicht wenigstens aus einem Element besteht, das aus der Gruppe ausgewählt wird, die aus Edelmetall, Wolfram, Tantal und Rhenium besteht.

8. Vorformling aus optischem Glas mit einer Form, die annähernd der Form einer optischen Linse aus Glas entspricht, der an einer Seite desselben eine erste Oberfläche (4) und an der anderen Seite desselben eine zweite Oberfläche (5) aufweist, wobei die zweite Oberfläche durch eine hochglatte Oberfläche (1) einer Wärmebearbeitungsform (16) bestimmt wird, die mit einer chemisch stabilen dünnen Schicht (2) beschichtet ist, wobei der Vorformling hergestellt werden kann, indem ein Rohling aus geschmolzenem Glas auf die hochglatte Oberfläche der Wärmebearbeitungsform in einer nichtoxidierenden Atmosphäre aufgelegt wird, und die Wärmebearbeitungsform in der nichtoxidierenden Atmosphäre erwärmt wird, wodurch das Glas geschmolzen und thermisch verformt wird, und so die zweite Oberfläche, die durch die hochglatte Oberfläche bestimmt wird, an einem Abschnitt gebildet wird, der mit der glatten Oberfläche in Kontakt ist, und die erste Oberfläche durch Oberflächenspannung im geschmolzenen Glas an einem Abschnitt gebildet wird, der nicht mit der glatten Oberfläche in Kontakt ist.

## Revendications

1. Procédé de fabrication d'un élément optique de verre, comprenant les étapes suivantes :
la préparation d'une ébauche (18) de verre optique ayant une configuration correspondant approximativement à la configuration finale voulue pour l'élément optique (22) de verre,
la disposition de l'ébauche de verre optique entre des surfaces de moulage d'une paire de moules chauffés supérieur et inférieur (20), et
le moulage par compression de l'ébauche de verre optique avec la paire de moules supérieur et inférieur pour l'obtention d'un produit final sous forme de l'élément optique de verre,
dans lequel la préparation de l'ébauche comprend :
la disposition d'une paraison de verre (3) sur une surface d'un organe (16) de mise en forme par traitement thermique en atmosphere non oxydante, la surface de l'organe de mise en forme étant très lisse et revêtue d'un mince film (2) chimiquement stable, et
le chauffage de l'organe de mise en forme dans l'atmosphère non oxydante afin que la paraison fonde et se déforme thermiquement en formant l'ébauche de verre optique qui a une première surface (5) dont la configuration est délimitée par la surface lisse au contact de la première surface et une seconde surface libre (4) formée par la tension superficielle du verre fondu qui n'est pas au contact de la surface lisse.

2. Procédé selon la revendication 1, dans lequel le moule inférieur (20) est utilisé comme organe (16) de mise en forme et de traitement thermique.

3. Procédé de fabrication d'un élément optique de verre, comprenant les étapes suivantes :
la préparation d'une ébauche (18) de verre optique ayant une configuration correspondant approximativement à la configuration finale voulue pour l'élément optique de verre (22),
la disposition de l'ébauche de verre optique entre les surfaces de moulage d'une paire de moules chauffés supérieur et inférieur (20), et
le moulage par compression de l'ébauche de verre optique avec la paire de moules supérieur et inférieur pour l'obtention du produit final de l'élément optique de verre,
dans lequel la préparation de l'ébauche comprend :
la réception de verre fondu (3) sur une surface d'un premier organe (24) de mise en forme et de traitement thermique pour la mise du verre à une configuration grossière,
le retournement et le transfert du verre à la surface d'un second organe (16) de mise en forme par traitement thermique en atmosphère non oxydante, la surface du second organe de mise en forme et de traitement thermique étant très lisse et revêtue d'un film mince (2) chimiquement stable, et
le chauffage du second organe de mise en forme et de traitement thermique en atmosphère non oxydante, de manière que le verre soit fondu et se déforme thermiquement et qu'il constitue l'ébauche de verre optique qui a une première surface (5) dont la configuration est formée par la surface lisse, au contact de ladite surface, et une seconde surface libre (4) formée par la tension superficielle dans le verre fondu qui n'est pas au contact de la surface lisse.

4. Procédé selon la revendication 3, dans lequel la surface du premier organe (24) de mise en forme et de traitement thermique au contact du verre fondu est formée d'un matériau qui n'est pas facilement recouvert par le verre fondu.

5. Procédé selon la revendication 4, dans lequel ledit matériau est le carbone, le graphite, le carbone vitreux, le nitrure de bore, l'acier inoxydable ou un alliage à base de nickel.

6. Procédé selon l'une quelconque des revendications 1 à 5, dans lequel les surfaces de moulage de la paire de moules supérieur et inférieur (20) sont revêtues d'un mince film (2) chimiquement stable.

7. Procédé selon l'une quelconque des revendications 1 à 6, dans lequel le mince film chimiquement stable comprend au moins un élément choisi dans le groupe qui comprend un métal précieux, le tungstène, le tantale et le rhénium.

8. Ebauche de verre optique ayant une configuration correspondant approximativement à celle d'une lentille optique de verre, ayant d'un premier côté une première surface (4) et de l'autre côté une seconde surface (5), la seconde surface étant délimitée par une surface très lisse (1) d'un organe (16) de mise en forme et de traitement thermique qui est revêtue d'un film mince (2) chimiquement stable, l'ébauche étant destinée à être obtenue par disposition d'une paraison de verre fondu sur la surface très lisse de l'organe de mise en forme et de traitement thermique en atmosphère non oxydante, et par chauffage de l'organe de mise en forme et de traitement thermique dans l'atmosphère non oxydante afin que le verre fonde et se déforme thermiquement en donnant la seconde surface délimitée par la surface très lisse dans une partie qui est au contact de la surface lisse, et la première surface formée par la tension superficielle du verre fondu dans la partie qui n'est pas au contact de la surface lisse.
